Europäisches Patentamt

European Patent Office

Office européen des brevets

(11) Publication number: **0 020 174**
A1

(12) **EUROPEAN PATENT APPLICATION**

(21) Application number: **80301834.0**

(51) Int. Cl.³: **B 23 K 37/00**

(22) Date of filing: **02.06.80**

(30) Priority: **31.05.79 GB 7919089**

(43) Date of publication of application: **10.12.80**
**Bulletin 80/25**

(84) Designated Contracting States: **BE DE FR NL**

(71) Applicant: **AIR PRODUCTS AND CHEMICALS, INC., P.O.
Box 538, Allentown, Pennsylvania 18105 (US)**

(72) Inventor: **Bennett, Bernard John, 3 Lynton Way,
Wistaston, Crewe (GB)**

(74) Representative: **Lucas, Brian Ronald, c/o Air Products
Limited Coombe House St. George's Square, New
Malden Surrey, KT3 4HH (GB)**

(54) **Method of doping shielding gas.**

(57) A method of doping a shielding gas with a dopant
which will react with oxone is characterized in that it comprises the steps of mixing the shielding gas and a carrier
gas containing a known quantity of the dopant and having,
with the dopant, a thermal conductivity differing substan-
tially from that of the shielding gas measuring the thermal
conductivity of the mixture and adjusting the composition
of the mixture until the thermal conductivity reaches a pre-
determined value.

In Europe the shielding gas will generally comprise
argon and the carrier gas helium containing nitric oxide
and/or halocarbon(s) as dopant.

ACTORUM AG

COMPLETE DOCUMENT

This invention relates to a method of doping shielding gas.

During recent years considerable concern has been expressed regarding the adverse physiological effects of ozone which is formed during MIG and TIG welding. In order to reduce the quantity of ozone which the welder inhales it has been proposed to add certain dopants to the shielding gas employed during such welding. Typically the dopant is present in the shielding gas to the extent of about 1000 ppm by volume and reacts with the ozone formed to render the ozone physiologically inert.

Although such small quantities of dopant can be readily added to cylinders of shielding gas using expensive and sophisticated equipment there is no method readily available for the ordinary customer who stores his shielding gases in liquid form to add such small quantities of dopant to his shielding gases as they are vaporized.

In order to meet this problem we propose a method of doping a shielding gas with a dopant which will react with ozone, which method is characterized in that it comprises the steps of mixing said shielding gas and a carrier gas containing a known quantity of said dopant and having, with said dopant, a thermal conductivity differing substantially from that of said shielding gas, measuring the thermal conductivity of said mixture and adjusting the composition of said mixture until said thermal conductivity reaches a predetermined value.

Preferably the thermal conductivity of said shielding gas and said carrier gas, with dopant, differ (at $0^{\circ}C$) by at least 10 cal/cm. sec/$^{\circ}C$ and more preferably by at least 20 cal/cm. sec/$^{\circ}C$.

Typically, in Europe, the shielding gas will be argon or a mixture of argon and carbon dioxide. In such a case the carrier gas is preferably helium. However, when the shielding gas is helium or a mixture of helium and carbon dioxide, such as commonly used in the USA, the carrier gas is preferably argon.

The dopant may be amongst those already known, for example hydrogen or nitric oxide or may be selected from other dopants which have not heretofore been proposed for this purpose. Such dopants include silane, carbon monoxide and halocarbons with fluorinated halocarbons being particularly preferred.

The concentration of the dopant in the carrier gas will to some extent depend on such factors as the toxicity of the dopant, the accuracy of the mixing equipment and the accuracy of the meter measuring the thermal conductivity of the resulting mixture. However, in general, the carrier gas will contain between 1 and 30% (by volume) dopant and from 1 to 10% being preferred and from 3 to 7% being recommended.

0020174

For a better understanding of the invention reference will now be made to the following example:

## EXAMPLE

A bank of 10 cylinders containing 5% (by volume) halocarbon 13 in helium was connected to one inlet of a standard mixing panel. The other inlet was connected to a bulk supply of argon. The valves on the mixing panel were then adjusted until the thermal conductivity of the mixture indicated that the mixture contained approximately 2% by volume helium, i.e. approximately 1000 ppm halocarbon 13.

It should be noted that whilst the present invention is particularly useful to customers who store their shielding gases in liquid form it is also useful to those who keep their shielding gases in cylinders arranged in banks of, for example, 10 to 50 cylinders connected to a common manifold.

0020174

## CLAIMS

1. A method of doping a shielding gas with a dopant which will react with ozone, which method is characterized in that it comprises the steps of mixing said shielding gas and a carrier gas containing a known quantity of said dopant and having, with said dopant, a thermal conductivity differing substantially from that of said shielding gas, measuring the thermal conductivity of said mixture and adjusting the composition of said mixture until said thermal conductivity reaches a predetermined value.

2. A method according to Claim 1, characterized in that the thermal conductivity of said shielding gas and said carrier gas, with dopant, differ (at $0^\circ C$) by at least 10 cal/cm. sec/$^\circ$C.

3. A method according to Claim 1 or 2, characterized in that the thermal conductivity of said shielding gas and said carrier gas, with dopant, differ (at $0^\circ C$) by at least 20 cal/cm. sec/$^\circ$C.

4. A method according to any preceding Claim, characterized in that said carrier gas is argon or helium.

5. A method according to any preceding Claim, characterized in that said dopant is selected from the group consisting of hydrogen, nitric oxide, silane, carbon monoxide, halocarbons and mixtures thereof.

6. A method according to any preceding Claim, characterized in that said carrier gas contains (by volume) from 1 to 30% dopant.

7. A method according to any preceding Claim, characterized in that said carrier gas contains (by volume) from 1 to 10% dopant.

8.    A method according to any preceding Claim, characterized in that said carrier gas contains (by volume) from 3 to 7% dopant.

For the Applicants,

Brian Lucas
CHARTERED PATENT AGENT
EUROPEAN PATENT ATTORNEY

European Patent Office

**EUROPEAN SEARCH REPORT**

0020174

Application number

EP 80301834.0

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | DE - A1 - 2 748 417 (ABA AB)<br><br>+ Totality +<br><br>---- | 1,5 | B 23 K 37/00 |

**TECHNICAL FIELDS SEARCHED (Int.Cl. ³)**

B 23 K 37/00
B 23 K 9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>07-08-1980 | Examiner<br>BENCZE | |

EPO Form 1503.1   06.78